# EUROPEAN PATENT APPLICATION

(11) **EP 1 357 399 A2**
(43) Date of publication of application: **29.10.2003**
(21) Application number: 02078304.9
(22) Date of filing: 08.08.2002
(51) Int. Cl.: G01T 1/24

(54) **Detachable gamma radiation converter device**

(30) Priority: 23.03.2002 ES 200200689
(71) Applicant: Plastunion, S.A., 08001 Barcelona (ES)
(72) Inventor: Lleonart Suarez, Alejandro c/o Plastunion, S.A., 08001 Barcelona (ES)
(74) Representative: Lahidalga de Careaga, Jose Luis

(57) **Abstract**

A detachable gamma radiations converter device consisting of a body (2) manufactured from transparent resin, incorporating two light leds (4) and a chip (3), having a detachable adhesive material surface (5) on the part opposite the resin body (2).

## Description

### OBJECT OF THE INVENTION

The present specification refers to a Patent of Invention application corresponding to a detachable gamma radiation converter device, whose purpose lies on being adapted onto mobile telephones, reducing the radiation and transforming it into light with no need of a battery whatsoever.

Another object of the invention is the fact that the device is shaped as a light indicating incoming calls in dark and noisy places.

### FIELD OF THE INVENTION

This invention has its application within the industry dedicated to manufacturing auxiliary apparatuses, devices and elements for reducing gamma radiations and the like.

### BACKGROUND OF THE INVENTION

The applicant has no knowledge of the current existence of an invention having the features described in the present specification.

### DESCRIPTION OF THE INVENTION

The detachable gamma radiation converter device proposed by the invention is shaped by itself as a totally novel element achieving radiation reduction on one hand and at the same time transforming it into light without the need of using any type of battery.

More specifically, the detachable gamma radiation converter device object of the invention is constituted of a body adopting an oval shape, having a concave relief surface manufactured from transparent resin.

The invention has two light leds of different colors lighting up in the center of the body of the device.

The invention has a chip whose energy source originates from transforming the energy wave radiation, with the object of lighting up the leds, subsequently reducing the negative part of the radiation.

The invention has a detachable adhesive material on its lower part protecting the incorporated chip, and at the same time permitting its coupling and uncoupling on different mobile telephones.

Lastly, the invention has a decoration on the concave relief surface of transparent resin.

### DESCRIPTION OF THE DRAWINGS

To complement the description being carried out and with the object of helping to better understand the features of the invention, a sheet of drawings accompanies the present specification as an integral part thereof, which shows the following with an illustrative and non-limiting character:
Figure number 1.- Shows a plan view of the object of the invention corresponding to a detachable gamma radiations converter device.
Figure number 2.- Shows a side elevational view of the object shown in figure number 1.

### PREFERRED EMBODIMENT OF THE INVENTION

In view of these figures, it can be seen how the detachable gamma radiations converter device (1) is constituted of an oval body (2) of a concave surface manufactured from transparent resin, which has decorations (6) of any manner and shape.

The invention has two light leds (4) of different colors lighting up in the central area of the body (2), incorporating a chip (3) whose energy source originates from the transformation of the energy wave radiation so that the two lights light up, reducing the negative part of the radiation.

Lastly, the invention has a lower part (5) of an adhesive material protecting the chip (3) and permitting the coupling and uncoupling of the device (1) body onto different mobile telephones.

The invention permits reducing radiation by transforming it into light on one hand, being shaped as a lighting indicator without the use of any type of battery.

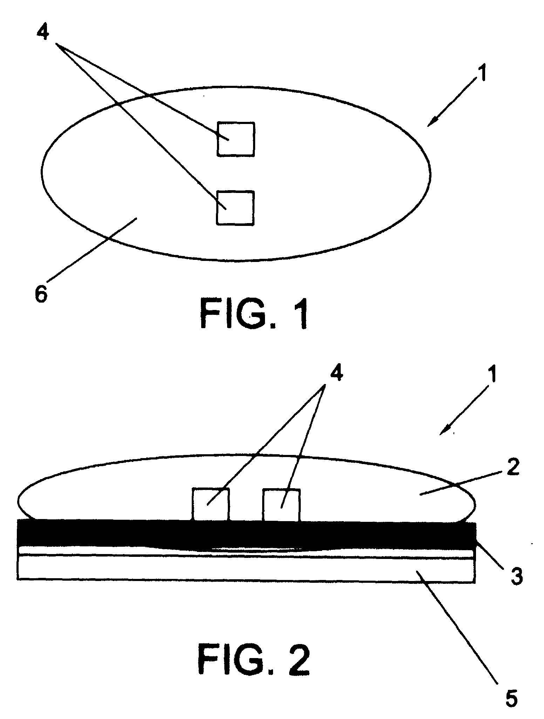

## Claims

1. A detachable gamma radiations converter device of those intended to be used as a negative radiations converter device, **characterized in that** it is constituted of a body (2) manufactured from a transparent resin, having a concave relief surface inside of which two light leds (4) of different colors are located, incorporating a chip (3) in the lower part, the part opposite the protective resin body (2) having a detachable adhesive material surface (5).
